Europäisches Patentamt

European Patent Office

Office européen des brevets

(11) Veröffentlichungsnummer: **0 187 388**
**A2**

(12) # EUROPÄISCHE PATENTANMELDUNG

(21) Anmeldenummer: 85116641.3

(22) Anmeldetag: 30.12.85

(51) Int. Cl.⁴: **B 60 S 9/08**

(30) Priorität: 05.01.85 DE 3500221

(43) Veröffentlichungstag der Anmeldung:
16.07.86 Patentblatt 86/29

(84) Benannte Vertragsstaaten:
BE GB NL SE

(71) Anmelder: Haacon Hebetechnik GmbH
Josef-Haamann-Strasse 6
D-6982 Freudenberg/Main(DE)

(72) Erfinder: Wenzel, Jörg
Josef-Haamann-Strasse 6
D-6982 Freudenberg/Main(DE)

(74) Vertreter: Fuchs, Richard
Kantstrasse 18
D-8700 Würzburg(DE)

(54) Höhenverstellbares Abstützgerät, insbesondere Sattelaufliegerstütze.

(57) Die Sattelaufliegerstütze, welche paarweise an der Unterseite von Sattelanhängern angeordnet ist, besteht aus einer durch eine Handkurbel betätigbaren Spindelwinde 10 mit einem Außenrohr 14 und einem axial in diesem beweglich gelagerten Innenrohr 15. Das Innenrohr 15 wird bei Betätigung der Handkurbel 11 gegenüber dem Außenrohr 14 axial verstellt. Am unteren Ende des Innenrohres 15 ist ein seitlich abklappbares Abstützteil 16 gelagert, welches einen Schwenkfuß 17 aufweist. Um das untere Abstützteil 16 selbsttätig in seine wirksame und unwirksame Stellung zu klappen, ist eine baulich einfache Kurvensteuerung 33 vorgesehen, die auf die Relativbewegung zwischen dem Außenrohr 14 und Innenrohr 15 der Spindelwinde 10 anspricht. Diese Kurvensteuerung 33 bewirkt auch selbsttätig die Arretierung des Abstützteils 16 in seiner wirksamen und unwirksamen Stellung.

./...

*Fig. 2*

1

haacon hebetechnik gmbh, 6982 Freudenberg/Main

Höhenverstellbares Abstützgerät, insbesondere

Sattelaufliegerstütze

Die Erfindung bezieht sich auf ein höhenverstellbares Abstützgerät, insbesondere Sattelaufliegerstütze, bestehend aus einer durch eine Handkurbel betätigbaren Winde mit einem Außenrohr und einem axial beweglich gelagerten Innenrohr, welches bei Betätigung der Winde gegenüber dem Außenrohr axial verstellt wird, wobei das Innenrohr ein seitlich abklappbares unteres Abstützteil zwecks Höhen-Gewinn bzw. Reduzierung über die Bewegung des Innenrohres hinaus aufweist, welches wenigstens eine Laufrolle, einen Gelenk- oder Schwenkfuß o.dgl. trägt. Bei dem höhenverstellbaren Abstützgerät kann es sich auch um Nivelierstützen, Stabilisierungsstützen für abgestellte Fahrzeuge, Einachsanhänger u. dgl. handeln.

Bei bekannten derartigen Abstützgeräten in Form von Sattelaufliegerstützen ist das abklappbare untere Abstützteil von Hand in seine wirksame und unwirksame Stellung zu schwenken und in diesen Stellungen durch Steckbolzen zu sichern. Da jeder Sattelanhänger mit zwei Stützen versehen ist, wird deren Bedienung aufwendig. Will man beispielsweise einen Sattelanhänger nach Trennung
von der Zugmaschine auf den beiden Sattelaufliegerstützen
auflagern, muß der Bediener an zwei verschiedenen,
einander gegenüberliegenden Stellen nacheinander die
unteren Abstützteile entsichern, in Arbeitsstellung
bringen und wieder sichern. Erst dann darf er die beiden
Sattelaufliegerstützen mittels der Handkurbel betätigen,
um ihre Auflage am Boden zu erreichen. Dabei ist vorausgesetzt, daß die zwei Sattelaufliegerstützen durch eine
Welle antriebsmäßig miteinander verbunden sind.

In der deutschen Patentanmeldung P 34 01 041.6-22 ist zwar
bereits eine Sattelaufliegerstütze beschrieben, bei der
die Klappbewegung ihres unteren Abstützteils in seine wirksame und unwirksame Lage durch einen Getriebemachanismus
bewirkt wird, dessen Betätigung von der Relativbewegung
zwischen dem Außen- und Innenrohr der Winde abgeleitet
wird. Der die Klappbewegung des Abstützteils erzeugende
Getriebemechanismus ist jedoch baulich verhältnismäßig
aufwendig und in bereits vorhandenen Sattelaufliegerstützen nachträglich nicht mehr einbaubar.

Der Erfindung liegt daher die Aufgabe zugrunde, ein höhenverstellbares Abstützgerät, insbesondere eine Sattelaufliegerstütze zu schaffen, bei dem bzw. der mit einfachen
baulichen Mitteln die Klappbewegung des unteren Abstützteils in seine wirksame und unwirksame Lage im Zuge der
Windenbetätigung bewirkt wird. Auch bereits vorhandene
Abstützgeräte sollen auf einfache Weise umgerüstet werden
können.

Gemäß der Erfindung wird diese Aufgabe dadurch gelöst,
daß die Klappbewegung des unteren Abstützteils in seine
wirksame und unwirksame Lage eine auf die Relativbewegung
zwischen dem Außen- und Innenrohr der Winde ansprechende
Kurvensteuerung erzeugt. Dadurch bleibt einerseits die
Bedienungsvereinfachung solcher Abstützgeräte erhalten,
denn im Zuge der Windenbetätigung werden zugleich die
unteren Abstützteile in ihre Arbeits- oder Ruhestellung
geklappt. Dies erfolgt bei Sattelaufliegerstützen in der
Regel paarweise, da die zwei Sattelaufliegerstützen eines
Hängers normalerweise durch eine Welle antriebsmäßig
miteinander verbunden sind. Andererseits ist jedoch die
erfindungsgemäße Kurvensteuerung im Vergleich zu dem bisher für die gleichen Zwecke verwendeten Getriebemechanismus baulich wesentlich einfacher und vor allem auch in
bereits vorhandene Abstützgeräte nachträglich ohne weiteres
einbaubar. Man braucht zu diesem Zweck lediglich das bisherige untere Abstützteil von dem Innenrohr des Abstützgeräts zu entfernen und durch ein Abstützteil zu ersetzen, welches die entsprechende Kurvenführung(en) aufweist. Dann ist bzw. sind nur noch am Außenrohr der Winde
die mit den Kurvenführungen zusammenwirkenden Steuerungselemente anzubringen.

Weitere Ausgestaltungen der Erfindung gehen aus den Unteransprüchen hervor. Die Ausgestaltung der Erfindung nach
Anspruch 2 bringt den Vorteil, daß die Kurvensteuerung
gleichzeitig auch die Arretierung des Abstützteils in
seiner wirksamen und unwirksamen Lage übernimmt. Bei der
bisherigen, in obiger Patentanmeldung beschriebenen Ausführung mit einem Getriebemechanismus ist für das Abstützteil eine zusätzliche Arretiervorrichtung notwendig.

Durch die Maßnahme entsprechend dem Anspruch 2 wird also
eine weitere bauliche Vereinfachung erzielt.

Nach noch einer anderen zweckmäßigen Ausgestaltung der Erfindung ist in einem Abstützgerät, bei dem das untere Abstützteil um eine horizontale Achse am unteren Ende des
Innenrohres der Winde drehbar gelagert ist, im seitlichen Abstand undachsparallel zur Drehachse des Abstützteils
wenigstens eine Führungsrolle am Außenrohr angeordnet,
die sich in einem Kurvenschlitz im Abstützteil erstreckt,
wobei diese Führungsrolle und der Kurvenschlitz die Kurvensteuerung bilden. Diese Kurvensteuerung stellt eine Einfachst-Version dar.

Wenn nach noch einer anderen Ausgestaltung der Erfindung
am Außenrohr zwei Führungsrollen angeordnet sind, die mit
einem Paar von Kurvenschlitzen im Abstützteil zusammenarbeiten, wird die Funktion der Kurvensteuerung entsprechend
verbessert.

Zweckmäßig sind nach noch einer anderen Weiterbildung der
Erfindung die zwei Führungsrollen achsgleich am Außenrohr gelagert. Zur Aufnahme der beiden Führungsrollen genügt also ein einzelner Lagerbolzen, der am unteren Ende
des Innenrohrs der Winde zu befestigen ist.

Nach einer anderen Weiterbildung der Erfindung weisen die
Kurvenschlitze je einen bogenförmigen Abschnitt von ca.
90° und einen an diesen anschließenden geradlinigen Abschnitt auf, der nach erfolgtem Abklappen des Abstützteils parallel zur Windenachse verläuft. Wenn im Zuge
der Windenbetätigung das Innenrohr der Winde aus dem
Außenrohr ausgefahren wird, bewirkt zunächst der bogenförmige Abschnitt der Kurvenschlitze die Schwenkung des
Abstützteils aus seiner horizontalen Ruhestellung in die
vertikale Arbeitsstellung. Im Verlauf der weiteren Windenbetätigung tritt dann der geradlinige Kurvenschlitz-Abschnitt in Funktion, der auch die Sicherung des Abstützteils in seiner Arbeitsstellung übernimmt.

Weitere baulich einfache Versionen hinsichtlich Anordnung
der Kurvenschlitze im unteren Abstützteil gehen aus den
Ansprüchen 7 und 8 hervor.

Wenn nach noch einer anderen Ausbildung der Erfindung die
zwei Arme des unteren Abstützteils durch aussteifende
Zwischenstücke starr miteinander verbunden sind, wird die
Belastbarkeit des unteren Abstützteils in Arbeitsstellung
verbessert.

Die Erfindung wird anschließend anhand der Zeichnungen
eines Ausführungsbeispiels erläutert. Es zeigen:

    Fig. 1        eine Schnittansicht einer Sattelauf-
                  liegerstütze  wobei das untere Ab-
                  stützteil in vollen Linien in einer
                  horizontalen Ruhestellung hochgeklappt
                  und in strichpunktierten Linien vertikal
                  nach unten abgeklappt gezeigt ist;

    Fig. 2        eine Seitenansicht der in Fig. 1 gezeigten Sattelaufliegerstütze und

    Fig. 3        eine Teilansicht des unteren Abstützteils, welches in diesem Fall ein Paar
                  Laufrollen trägt.

6

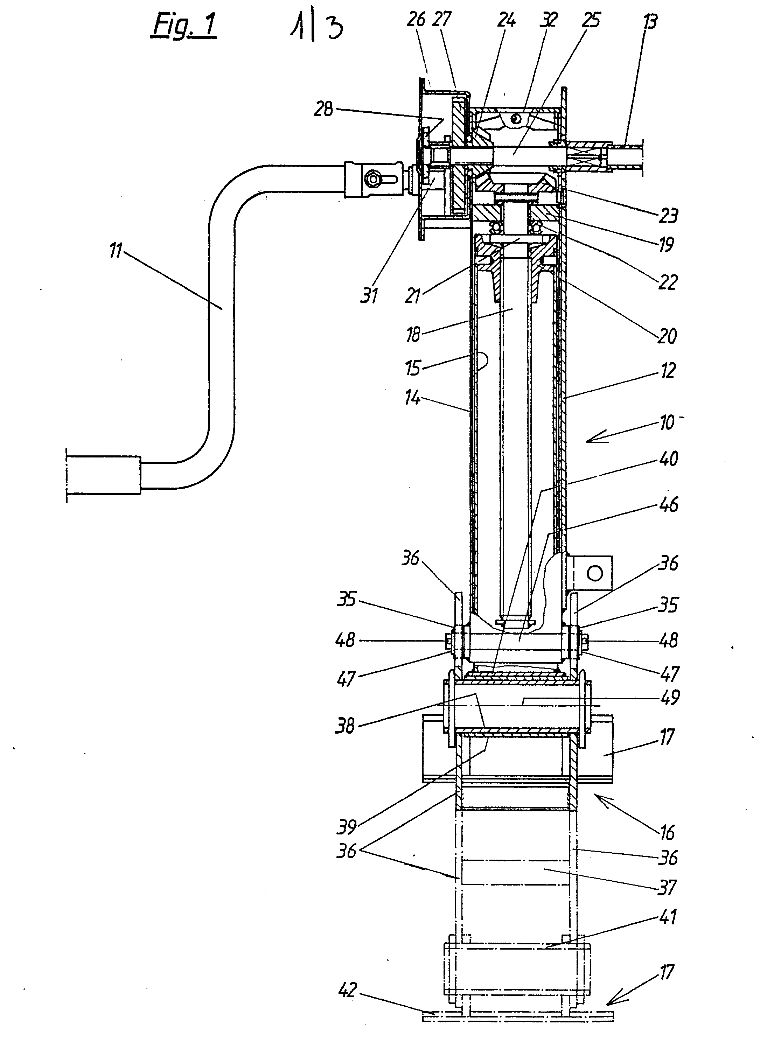

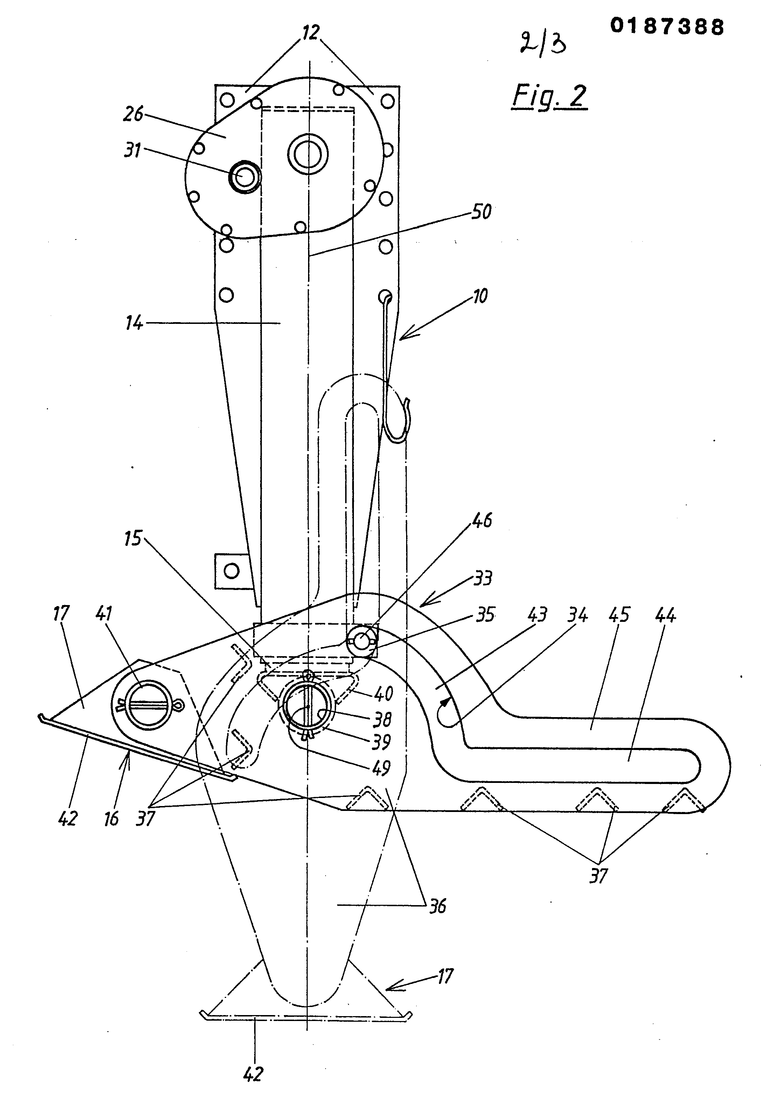

Die in den Figuren 1 und 2 gezeigte Sattelaufliegerstütze besteht aus einer Spindelwinde 10, welche durch
eine Handkurbel 11 betätigbar ist. Zwei solche in ihrem
Aufbau gleichartige Sattelaufliegerstützen werden in
seitlichem Abstand mittels jeweils einer Befestigungsplatte 12 an der Unterseite eines Sattelanhängers in
dessen vorderen Hälfte befestigt. Nach Trennung des
Sattelanhängers von einer Zugmaschine kann man diesen
auf die gegen den Boden ausgefahrenen Sattelaufliegerstützen auflagern. Die Spindelwinden 10 der zwei Sattelaufliegerstützen an einem Hänger sind in der Regel durch
eine Welle 13 antriebsmäßig miteinander verbunden, so
daß sie gemeinsam durch entsprechende Drehung nur einer
Handkurbel 11 aus- und eingefahren werden können.

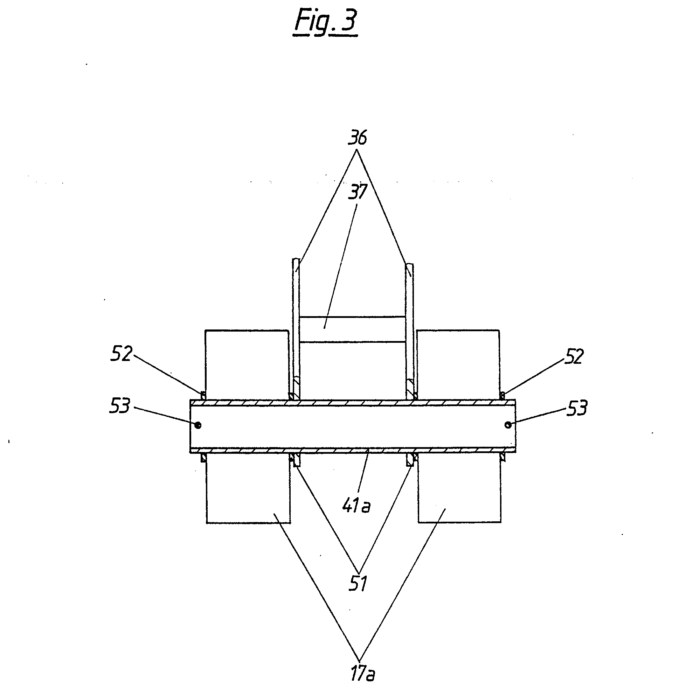

Die Spindelwinde 10 weist ein Außenrohr 14 und ein in
diesem axial beweglich gelagertes Innenrohr 15 auf. Beide
Rohre 14, 15 besitzen beim Ausführungsbeispiel einen
viereckigen Querschnitt. Am unteren Ende des Innenrohres
15 ist ein seitlich abklappbares Abstützteil 16 angeordnet, das beim Ausführungsbeispiel mit einem Schwenkfuß 17 versehen ist. Anstelle des Schwenkfußes 17 können
z.B. auch ein Gelenkfuß oder eine Laufrolle oder ein
Laufrollenpaar 17 a (Fig. 3) vorgesehen sein. Die Relativbewegung des Innenrohres 15 gegenüber dem ortsfesten
Außenrohr 14 erfolgt durch Drehung einer Gewindespindel
18. Die Gewindespindel 18 ist in einer in das Außenrohr 14 eingeschweißten Lagerplatte 19 drehbeweglich,
jedoch axial fixiert gelagert und trägt eine Mutter 20,
die mit dem oberen Ende des Innenrohres 15 fest verbunden ist.

Zwischen einem an der Gewindespindel 18 vorgesehenen Ringbund 21 und der Lagerplatte 19 ist ein Axial-Kugellager 22 angeordnet. Mit dem oberen Ende der Gewindespindel 18 ist ein auf der Lagerplatte 19 aufsitzendes Kegelrad 23 verstiftet, das mit einem Kegelrad 24 kämmt, welches auf einer Kegelradwelle 25 drehfest angeordnet ist. Die Kegelradwelle 25 erstreckt sich gemäß Fig. 1 nach links in ein Stirnradgetriebegehäuse 26. Auf dem in das Stirnradgetriebegehäuse 26 hineinreichende Teil der Kegelradwelle 25 sind zwei Zahnräder 27 und 28 befestigt, die wahlweise in Eingriff mit zwei nicht gezeigten Gegenzahnrädern gebracht werden können, welche auf einer axial verschieblich angeordneten Antriebswelle 31 befestigt sind. Die Antriebswelle 31 kann durch die Handkurbel 11 gedreht werden, wobei eine nicht gezeigte Sicherung die unterschiedlichen axialen Einstellpositionen dieser Antriebswelle 31 fixiert. Kämmt das eine Gegenzahnrad mit dem Zahnrad 27, ist eine Arbeitsweise im sog. Lastgang eingestellt. Kämmt dagegen das andere Gegenzahnrad mit dem Zahnrad 28, hat man eine Arbeitsweise im Schnellgang. Das vorstehend beschriebene Kegelradgetriebe ist nach oben durch eine in das Außenrohr 14 eingesteckte Kappe 32 geschützt.

Das seitliche Ab- und Hochklappen des unteren Abstützteils 16 in seine Arbeits- bzw. Ruhestellung erfolgt selbsttätig während einiger anfänglicher bzw. letzter Umdrehungen der Handkurbel 11 im Zuge eines Arbeitshubs der Spindelwinde 10. Diesem Zweck dient eine Kurvensteuerung 33 (Fig.2), welche auf die Relativbewegung zwischen dem Außenrohr 14 und dem Innenrohr 15 der Spindelwinde 10 anspricht. Die Kurvensteuerung 33 weist im Ausführungsbeispiel zwei Kurvenschlitze 34 und zwei in diesen Kurvenschlitzen laufende Führungsrollen 35 auf.

Das Abstützteil 16 umfaßt zwei Arme 36, die durch aussteifende Zwischenstücke 37 mit winkelförmigem Querschnitt starr miteinander verbunden sind. Die Arme 36 sind auf einer horizontalen Welle 38 befestigt, die als Hohlwelle ausgebildet und drehbeweglich in einer Buchse 39 gelagert ist, welche ihrerseits am unteren Ende des Innenrohres 15 über einen Bügel 40 starr befestigt, z.B. angeschweißt ist.

Zwischen den gemäß Fig.2 linken Enden der Arme 36 erstreckt sich eine hohle Achse 41, auf welcher der Schwenkfuß 17 drehbeweglich gelagert ist. Der Schwenkfuß 17 ist so gestaltet, daß seine Fußplatte 42 unter dem Einfluß der Schwerkraft stets nach unten zieht und eine horizontale Lage einzunehmen sucht.

Jeder Arm 36 des Abstützteils 16 enthält einen der Kurvenschlitze 34, welche die gleiche Form und Länge aufweisen sowie seitlich aufeinander ausgefluchtet sind. Im einzelnen umfassen die Kurvenschlitze 34 je einen bogenförmigen Abschnitt 43 mit einem Bogenwinkel von 90° und einen daran anschließenden geradlinigen Abschnitt 44, welcher in einem Fortsatz 45 der Arme 36 angeordnet ist.

Seitlich am unteren Ende des Außenrohres 14 der Spindelwinde 10 ist ein Lagerbolzen 46 starr befestigt, auf dessen beiden freien Enden die Führungsrollen 35 drehbeweglich gelagert sind, die in Eingriff mit den Kurvenschlitzen 34 stehen. Die Führungsrollen 35 sind seitlich
nach außen durch Scheiben 47 und Splinte 48 gesichert.
Der Lagerbolzen 46 für die Führungsrollen 35 erstreckt
sich im seitlichen Abstand sowie achsparallel zur Drehachse 49 des Abstützteils 16.

Zur Inbetriebnahme der Sattelaufliegerstütze wird durch
entsprechende Drehung der Handkurbel 11 das Innenrohr 15
ausgefahren. Dabei wandert die Drehachse 49 des Abstützteils 16 vertikal nach unten und die Arme 36 drehen sich
gleichzeitig um die Achse 49 entgegen dem Uhrzeigersinn
gemäß Fig. 2, da die bogenförmigen Abschnitte 43 der Kurvenschlitze 34 an den Führungsrollen 35 vorbei nach links
unten wandern. Wenn im Zuge des weiteren Ausfahrens des
Innenrohres 15 die Führungsrollen 35 das gem. Fig. 2
rechte Ende der bogenförmigen Abschnitte 43 erreicht
haben, nehmen die Arme 36 die in den Fig. 1 und 2 in
strichpunktierten Linien gezeigte vertikale Stellung ein.
Der Schwenkfuß 17 hat sich dabei selbsttätig unter dem
Einfluß der Schwerkraft in die in Fig. 1 und 2 in strichpunktierten Linien gezeigte Arbeitsstellung geschwenkt.
Wenn nun das Innenrohr 15 noch weiter ausgefahren wird,
bewegt sich der geradlinige Abschnitt 44 der Kurvenschlitze 34 an den Führungsrollen 35 vorbei nach unten.
Es wird bemerkt, daß diese geradlinigen Abschnitte 44 in
diesem Zustand parallel zur Achse 50 der Spindelwinde 10
verlaufen (Fig. 2). Das Innenrohr 15 wird nun soweit
nach unten gefahren, bis die Fußplatte 42 des Schwenkfußes 17 auf dem Boden aufliegt. Die vertikale Arbeitsstellung des Abstützteils 16 wird durch die Führungsrollen 35 gesichert, die sich in diesem Zustand in den
geradlinigen Abschnitten 44 der Kurvenschlitze 34 befinden und so jegliche Drehbewegung des Abstützteils 16
verhindern.

Wenn die Sattelaufliegerstütze  nicht mehr benötigt
und durch umgekehrte Drehung der Handkurbel 11 das
Innenrohr 15 über die Gewindespindel 18 und Mutter 20
nach oben gezogen·bzw. in das Außenrohr 14 eingefahren
wird, bewegen sich zunächst die Arme 36 nach oben, da
die geradlinigen Abschnitte 44 der Kurvenschlitze 34
mit den Führungsrollen 35 zusammenarbeiten, bis letztere
in die bogenförmigen Abschnitte 43 eintreten. Im Verlauf
der weiteren Aufwärtsbewegung des Innenrohres 15 erfolgt dann die Schwenkung des Abstützteils 16 im Uhrzeigersinn in die in Fig. 2 abgebildete Ruhestellung.
Diese Ruhestellung des Abstützteils 16 ist durch die
beiden Führungsrollen 35 gesichert, die in diesem Zustand an den linken Enden (Fig.2) der bogenförmigen
 Abschnitte 43 der Kurvenschlitze 34 anliegen.

Anstelle des (bei einem Umbau vorhandenen) Schwenkfußes 17 können, wie schon eingangs erwähnt,  z.B.
auch zwei (bei einem Umbau ggf. vorhandene) Laufrollen
17 a  an dem unteren Abstützteil 16 vorgesehen sein
(Fig.3). Diese Anordnung erfordert eine entsprechend
längere hohle Achse 41 a, auf deren seitlich aus den
Armen 36 herausragenden Teilen die Laufrollen 17 a
drehbeweglich gelagert werden können. Zwischen den
Armen 36 und den Laufrollen 17 a sind Beilagscheiben
51 eingelegt, und nach außen sind die Laufrollen 17 a
durch Scheiben 52 und Stifte 53 gesichert.

11

Patentansprüche

1. Höhenverstellbares Abstützgerät, insbesondere Sattelaufliegerstütze, bestehend aus einer durch eine Handkurbel betätigbaren Winde mit einem Außenrohr und einem axial beweglich gelagerten Innenrohr, welches bei Betätigung der Winde gegenüber dem Außenrohr axial verstellt wird, wobei das Innenrohr ein
seitlich abklappbares unteres Abstützteil zwecks Höhen-Gewinn
bzw. -Reduzierung über die Bewegung des Innenrohres hinaus
aufweist, welches wenigstens eine Laufrolle, einen Gelenk-
oder Schwenkfuß o. dgl. trägt, dadurch gekennzeichnet, daß
die Klappbewegung des unteren Abstützteils (16) in seine wirksame und unwirksame Lage eine auf die Relativbewegung zwischen
dem Außen- und Innenrohr (14, 15) der Winde (10) ansprechende
Kurvensteuerung (33) erzeugt.

2. Abstützgerät nach Anspruch 1, dadurch gekennzeichnet, daß
das Abstützteil (16) in seiner wirksamen und unwirksamen Lage
durch die Kurvensteuerung (33) arretierbar ist.

12

3. Abstützgerät nach Anspruch 1 oder 2, bei dem das untere Abstützteil um eine horizontale Achse am unteren Ende des Innenrohres der Winde drehbar gelagert ist, dadurch gekennzeichnet, daß im seitlichen Abstand und achsparallel zur Drehachse (49) des Abstützteils (16) wenigstens eine Führungsrolle (35) am Außenrohr (14) angeordnet ist, die sich in einen Kurvenschlitz (34) im Abstützteil (16) erstreckt, und daß diese Führungsrolle (35) und der Kurvenschlitz (34) die Kurvensteuerung (33) bilden.

4. Abstützgerät nach Anspruch 3, dadurch gekennzeichnet, daß am Außenrohr (14) zwei Führungsrollen (35) angeordnet sind, die mit einem Paar von Kurvenschlitzen (34) im Abstützteil (16) zusammenarbeiten.

5. Abstützgerät nach Anspruch 4, dadurch gekennzeichnet, daß die zwei Führungsrollen (35) achsgleich am Außenrohr (14) gelagert sind.

6. Abstützgerät nach einem der Ansprüche 1 - 5, dadurch gekennzeichnet, daß die Kurvenschlitze (34) je einen bogenförmigen Abschnitt (43) von ca. 90° und einen an diesen anschließenden geradlinigen Abschnitt (44) aufweisen, der nach erfolgtem Abklappen des Abstützteils (16) parallel zur Windenachse (50) verläuft.

7. Abstützgerät nach Anspruch 6, bei dem das untere Abstützteil zwei Arme aufweist, die am einen Ende die Laufrollen, der Gelenk- oder Schwenkfuß o. dgl. tragen, dadurch gekennzeichnet, daß die zwei Arme (36) die Kurvenschlitze (34) enthalten.

8.   Abstützgerät nach Anspruch 7, dadurch gekennezichnet, daß die zwei Arme (36) gegenüber dem die Laufroller, den Gelenk- oder Schwenkfuß (17) o.dgl. tragenden Ende mit einem Fortsatz (45) versehen sind, in den sich der geradlinige Abschnitt (44) der Kurvenschlitze (34) erstreckt.

9.   Abstützgerät nach Anspruch 7, dadurch gekennzeichnet, daß die zwei Arme (36) des unteren Abstützteils (16) durch aussteifende Zwischenstücke (37) starr miteinander verbunden sind.

Fig. 1   1/3

_Fig.3_